# EUROPEAN PATENT APPLICATION

(11) **EP 1 202 235 A1**
(43) Date of publication of application: **02.05.2002**
(21) Application number: 00948249.8
(22) Date of filing: 27.07.2000
(51) Int. Cl.: G09B 7/04, G09B 9/00, G06F 17/60

(54) **EDUCATION/TRAINING MANAGEMENT SYSTEM, TRAINING MANAGEMENT COMPUTER, CLASS ATTENDEE TERMINAL DEVICE, MANAGER TERMINAL DEVICE, EDUCATION/TRAINING MANAGEMENT METHOD**

(30) Priority: 29.07.1999 JP 21598899
(71) Applicant: Nikon Tec Corporation, Shinagawa-ku (JP); Nikon Corporation, Tokyo 100-8331 (JP)
(72) Inventor: OHNO, Hiromasa, Nikon Tec Corporation, Shinagawa-ku, 140-0012 Tokyo (JP)
(74) Representative: W.P. THOMPSON & CO.
(86) International application number: JP0005022
(87) International publication number: WO0109867

(57) **Abstract**

According to the present invention, in an education training management system, a computer for use in training management, a terminal for a trainee, a terminal for a manager, an education training management method and an education training method, the computer for use in training management comprises aggregate storing means for aggregating received lecture information and for storing the aggregate result, the terminal for a manager comprises reading means for accessing the computer for use in training management to read the aggregate result. As a result, managers easily can read lecture information of a trainee from a remote location, and can give appropriate instruction to the trainee depending on the level of understanding and the progress status of the trainee, which is obtained from the computer for use in training management.

## Description

### BACKGROUND OF THE INVENTION

### 1. Field of the invention

The present invention relates to an education training management system, a computer for education training, a terminal for a trainee, a terminal for a manager, a method for education training management and a method for education training, which is used for the trainee such as service engineers to master techniques and skills for maintenance and inspection of, for example, an exposure apparatus and the like.

### 2. Prior arts

An exposure apparatus is used as a manufacturing apparatus for semiconductor devices, liquid crystal display devices, image pickup devices (such as CCD's) or thin film magnetic heads by means of photolithography techniques. Since the aligner is large and complicated, maintenance and inspection such as repair and mending by service engineers is typically performed at the actual site of a factory where the apparatus is installed. In addition, since the aligner is generally designed for usage over a long periods of time, sufficient and quick maintenance during its operation is demanded from service engineers.

Thorough education training must be performed for each service engineer in order for engineers to master the techniques and skills for maintenance and inspection of the apparatus. Conventionally, it has been common for service engineers to assemble for studying theory and attending technical lectures in groups, or they master techniques and skills at a job site by the so called OJT method.

However, in the above-described education training method which is performed by gathering service engineers from each location (each business office), there is often a difficulty in adjusting the schedules of all engineers, and the inconvenience that a certain amount of time is required for transportation.

Moreover, since the training is simultaneously carried out for a plurality of engineers, it is difficult to give individual and appropriate training according to the level of understanding of each engineer. Because technical explanations such as technical lectures can be long, the inconvenience occurs that there is not enough time for actual practice. Particularly, in the case of an apparatus having a complicated structure, the large number of parts, the shapes of which are important, it is difficult to obtain enough understanding in a short period of time only by a short time technical lecture and simple study on theory.

Furthermore, since each service engineer usually performs his or her job apart from his or her superior, who is a manager, the manager cannot grasp the level of understanding and progress of each engineer only by the OJT method and performing OJT at the actual site of a customer is difficult.

In some cases, the superior not only has to appropriately grasp the level of understanding and the progress of the service engineers who are his or her subordinates, but also wants to change the knowledge or skills to be mastered by the subordinates. However, accurate instructions cannot be given to engineers when their jobs are performed in remote locations. Individual information such as the level of understanding and progress of service engineers is supposed to be managed by certain means, and it is not preferable for third parties other than specified people such as the superior to have access to such information, but there have not been appropriate management means.

Every time an apparatus for maintenance and inspection is improved or changed to a new model, the techniques and skills to be mastered by service engineers also change. It is difficult for every engineer to grasp the several changes due to the improvement and to master the new techniques and skills efficiently in consideration of previously mastered contents.

Alternatively, a service engineer changes to another section due to a transfer or because his or her job to be performed changes, the techniques and skills to be mastered by the service engineer also change accordingly. In such a case, the workload on the service engineer is large, because the engineer has to decide what has to be mastered in consideration, of previously mastered techniques and skills.

The present invention was made in view of the above-described problems. The object of the present invention is to provide an education training management system, a computer for education training, a terminal for a trainee, a terminal for a manager, a method for education training management and a method for education training, which can perform an efficient and appropriate education training for the trainee according to the level of understanding and progress of each, by which managers can easily manage the trainee, and the trainee can appropriately manages and changes the skills and tchniques to be mastered.

### SUMMARY OF THE INVENTION

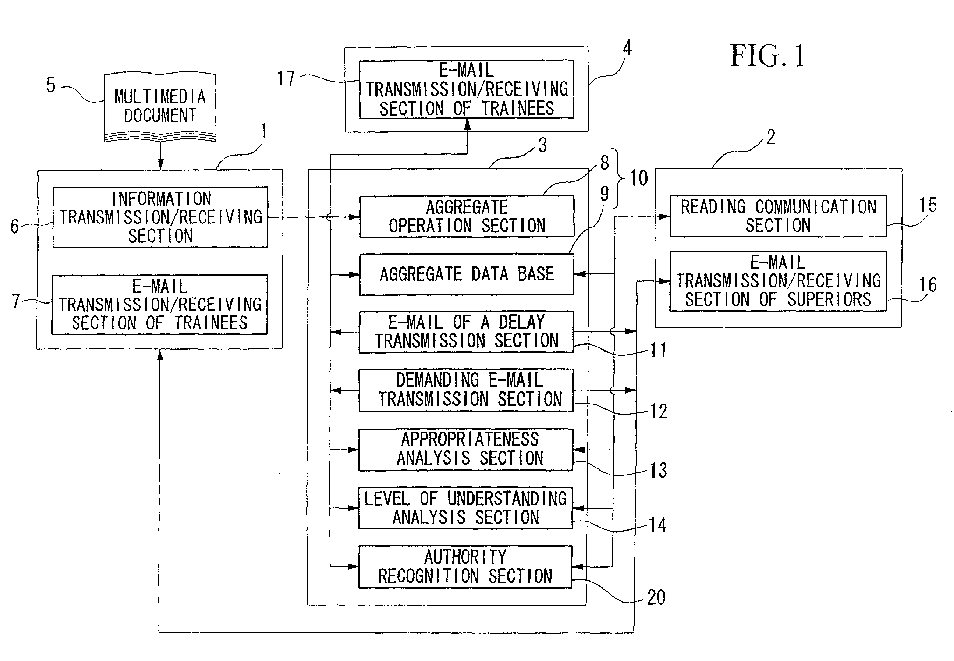

The present invention adopts the following constitutions in order to solve the above-described problems. The description will be given with reference to Fig. 1 to Fig. 10. The education training management system of the present invention adopts technology that comprises: a terminal (1) for a trainee that can provide an education training course taken by trainee; a terminal (2) for a manager used by a manager of the trainee; and a computer (3) for use in training management that is connected to the terminal for a trainee and the terminal for a manager via a communication line and lecture information of the trainee, the terminal for a trainee comprising information communication means that automatically transmits lecture information of the trainee to the computer for use in training management, the computer for the training management comprising aggregate storing means (10) that aggregates the received lecture information and stores the aggregate results, and the terminal for a manager comprising reading means (15) that can read the aggregate result by accessing the computer for a manager via the communication line.

A method of education training management of the present invention comprises the steps of: providing an education training course for a trainee through the terminal (1) for the trainee; receiving lecture information of the trainee from the terminal for a trainee via a communication line; aggregating the lecture information and storing the aggregate results by the computer for use in training management (3); and enabling a manager of the trainee to read the aggregate results when the manager accesses the computer for use in training management by the terminal (2) for a manager via a communication line.

In the education training management system and the method of the education training management, the computer (3) for use in training management aggregates the lecture information and stores the aggregate results, and the aggregate results are readable by accessing the computer for use in training management by the terminal (2) for a manager via a communication line. Therefore, lecture information of each trainee who individually took the lecture can be intensively managed, and the manager can easily read it from a remote location and the like, thus the manager can give appropriate instruction to the trainee according to the obtained information concerning the level of understanding and progress of each trainee.

A computer for use in training management of the present invention is a computer (3) for use in training management that managing lecture information of a trainee who takes an education training course, wherein the computer (3) for use in training management, which manages lecture information of the trainee who take an education training course, gives the manager authority to perform at least either a change of the lecture contents of the trainee or reading of lecture information, and the lecture contents are changed or the lecture information is provided to the terminal (2) for a manager via a communication line according to the instructions of a manager with authority.

The method of education training management of the present invention is a method of education training management for a trainee who takes an education training course, which comprises the steps of: giving the manager authority to perform at least either a change of lecture contents for the trainee or reading of lecture information by the computer (3) for use in training management that manages lecture information of the trainee; and changing the lecture contents managed by the computer for use in training management or providing the lecture information to the terminal (2) for a manager via a communication line according to instructions of the manager with authority.

In the computer for use in training management and the method of education training management, the lecture content that is managed by the computer (3) for use in training management is changed or the lecture information is provided to the terminal (2) for a manager via a communication line according to instructions of the manager. Therefore, only the manager with authority can change the lecture contents and instruct the trainee under management of the manager with an appropriate lecture, and the status of the trainee can be accurately grasped because the manager can optionally read the lecture information.

A terminal for a trainee of the present invention is a terminal (1) for a trainee that can provide an education training course taken by the trainee, which is connected to the computer (3) for use in training management that manages the lecture information of the trainee via a communication line, and includes function information communication means that receives the education training course from the computer for use in training management and transmits the lecture information to the computer for use in training management, and the lecture contents of the education training course provided by the computer for use in training management can be changed by the manager of the trainee or the lecture information to be transmitted to the computer for use in training management is readable by the manager.

A method of education training of the present invention is the method of education training for a trainee who takes an education training provided by the terminal (1) for a trainee, which comprises the steps of: receiving the education training course from the computer (3) for use in training management that manages the lecture information of the trainee via a communication line; and transmitting the lecture information to the computer for use in training management, and the lecture contents of the education training course provided by the computer for use in training management can be changed by the manager of the trainee or the lecture information to be transmitted to the computer for use in training management is readable by the manager.

In the terminal for a trainee and the method of education training, the lecture contents of the education training course provided by the computer for use in training management can be changed by the manager of the trainee or the lecture information to be transmitted to the computer for use in training management is readable by the manager. Therefore, the manager can change the lecture contents or read the lecture information of the trainee under management of the manager.

A terminal for a manager of the present invention is a terminal (2) for a manager used by the manager of a trainee who takes an education training course, where authority is given for performing at least either a change of the lecture contents of the trainee or read the lecture information with regard to data stored in the computer for use in training management by transmitting the identification information of the manager to the computer (3) for use in training management that manages the lecture information of the trainee via a communication line.

A method of education training management of the present invention is the method of education training management for a trainee who takes an education training course, which comprises the steps of: transmitting identification information of a manager from the terminal (2) for a manager used by the manager of the trainee via a communication line; and giving authority for performing at least either change of lecture contents of the trainee or reading of lecture information with regard to data stored in the computer for use in training management according to the identification information by transmitting identification information of the manager to the computer (3) for use in training management that manages the lecture information of the trainee via a communication line.

In the terminal for a manager and the method of education training management, authority is given to the terminal (2) for a manager for performing at least either change of lecture contents of the trainee or reading of lecture information with regard to data stored in the computer (3) for use in training management according to the identification information. Therefore, the manager can optionally change the lecture contents or read the lecture information for the trainee under management of the manager.

A computer for use in training management of the present invention is a computer (3) for use in training management that manages the lecture information of a trainee who takes an education training course, and if the contents of the education training course are changed, notification of the change or information about the changed contents is provided to at least either the terminal (1) for a trainee of the trainee who needs to take a lecture according to the change or the terminal (2) for a manager of the manager who manages the trainee via a communication line.

A method of education training management of the present invention is a method of education training management for a trainee who takes an education training course provided by the terminal for a trainee and in if the contents of the education training course are changed, notification of change or information about the changed contents is provided to at least either the terminal (1) for a trainee of the trainee who needs to take a lecture according to the change or the terminal (2) for a manager of the manager who manages the trainee via a communication line.

In the computer for use in training management and the method of education training management, a notification of a change or of information about the changed contents is provided to at least either the terminal (1) for a trainee of the trainee who needs to take a lecture according to the change of the education training course or the terminal (2) for a manager of the manager who manages the trainee via a communication line. Therefore, the trainee and the manager can learn about the change of contents of the education training course at any time.

A terminal for a trainee of the present invention is a terminal (1) for a trainee that can provide the education training course taken by the trainee, and if the contents of the education training course that the trainee need to take are changed, notification of the change or information about the changed contents is received from the computer (3) for use in training management that manages the lecture information of the trainee via a communication line.

A method of education training of the present invention is the method of education training for a trainee who takes an education training course provided by the terminal (1) for a trainee and in the case where the contents of the education training course that the trainee must take are changed, a notification of the change or information about the changed contents is received by the terminal for a trainee from the computer (3) for use in training management that manages the lecture information of the trainee via a communication line.

In the terminal for a trainee and the method of education training, when the contents of the education training course is changed, the terminal for a trainee receives notification of the change or information of the changed contents from the computer (3) for use in training management that manages the lecture information of the trainee via a communication line. Therefore, the trainee can obtain information of the changed contents any time, thus an appropriate lecture can be taken according to the change.

A terminal for a manager of the present invention is a terminal (2) for a manager used by the manager of a trainee who takes an education training course and if the contents of the education training course that the trainee must take are changed, a notification of the change or information about the changed contents is received from the computer (3) for use in training management that manages the lecture information of the trainee.

A method of education training management of the present invention is a method of education training management for a trainee who takes an education training course and if the contents of the education training course that the trainee to be managed must take are changed, a notification of the change or information about the changed contents is received by the terminal (2) for a manager used by the manager of the trainee from the computer (3) for use in training management that manages the lecture information of the trainee.

In the terminal for a manager and the method of education training management, when the contents of the education training course are changed, a notification of the change or information about the changed contents is received by the terminal (2) for a manager used by the manager of the trainee from the computer (3) for training. Therefore, the manager can obtain at any time information of lecture contents that the trainee managed by the manager need to take, thus allowing for an easier understanding of the status of the trainee.

A computer for use in training management of the present invention is a computer (3) for use in training management that manages the lecture information of a trainee who takes an education training course and if information of a change of post or of the job contents of the trainee is provided, stored data corresponding to the trainee is changed, information of the lecture contents to be taken by the trainee is also changed according to the change, and the changed information is provided to the terminal (1) for a trainee of the trainee via a communication line.

A method of education training management of the present invention is a method of education training management for a trainee who takes an education training course provided by the terminal (1) for a trainee, where, if information of a change of post or the job contents is provided to the computer (3) for use in training management that manages the trainee, stored data in the computer for use in training management corresponding to the trainee is changed, information of the lecture contents to be taken by the trainee is also changed according to the change, and the changed information is provided by the computer (3) for use in training management to the terminal (1) for a trainee of the trainee via a communication line.

In the computer for use in training management and the method of education training management, when information of a change of post or the job contents of the trainee is provided to the computer (3) for use in training management, stored data in the computer for use in training management corresponding to the trainee is changed, information of the lecture contents to be taken by the trainee is also changed according to the change, and the changed information is provided by the computer (3) for use in training management to the terminal (1) for a trainee of the trainee via a communication line. Therefore, the above-described changed information can be provided to each trainee at any time.

A terminal for a trainee of the present invention is a terminal (1) for a trainee that can provide an education training course to be taken by the trainee, where information of a change of post or the job contents of the trainee is provided to the computer (3) for use in training management that manages the lecture information of the trainee via a communication line, stored data in the computer for use in training management corresponding to the trainee is changed, and information about the lecture contents to be taken by the trainee is also changed according to the change.

A method of education training of the present invention is a method of education training for the trainee who take an education training course provided by the terminal (1) for a trainee, where information of a change of post or the job contents of the trainee is provided by the terminal (1) for a trainee to the computer (3) for use in training management that manages the lecture information of the trainee via a communication line, stored data in the computer for use in training management corresponding to the trainee is changed, and information about the lecture contents to be taken by the trainee is also changed according to the change.

In the terminal for a trainee and the method of education training, information of a change of post or the job contents of the trainee is provided by the terminal (1) for a trainee to the computer (3) for use in training management via a communication line, stored data in the computer for use in training management corresponding to the trainee is changed, and information about the lecture contents to be taken by the trainee is also changed according to the change. Therefore, the above-described changed information can be entered into the computer (3) for use in training management by the trainee himself or herself, and information about the lecture contents to be taken according to the change can be automatically changed.

A terminal for a manager of the present invention is a terminal (2) for a manager used by the manager of the trainee who takes an education training course, where information of a change of post or the job contents of the trainee is provided to the computer (3) for use in training management that manages the lecture information of the trainee via a communication line, stored data in the computer for use in training management corresponding to the trainee is changed, and information about the lecture contents to be taken by the trainee is also changed according to the change.

A method of education training of the present invention is a method of education training for a trainee who take an education training course, where information of a change of post or the job contents of the trainee is provided by the terminal (2) for a manager used by the manager of the trainee to the computer (3) for use in training management that manages the lecture information of the trainee via a communication line, stored data in the computer for use in training management corresponding to the trainee is changed, and information about the lecture contents to be taken by the trainee is also changed according to the change.

In the terminal for a manager and the method of education training management, information of a change of post or the job contents of the trainee is provided by the terminal (2) for a manager used by the manager of the trainee to the computer (3) for use in training management that manages the lecture information of the trainee via a communication line, stored data in the computer for use in training management corresponding to the trainee is changed, and information about the lecture contents to be taken by the trainee is also changed according to the change. Therefore, the changed information of any trainee under management of the manager can be entered into the computer for use in training management and information about the lecture contents to be taken is also automatically changed according to the change.

### BRIEF DESCRIPTION OF THE DRAWINGS

Fig. 1 is a system constitution diagram of an education training management system showing an embodiment of the present invention.
Fig. 2 is a block diagram of each function of an education training management system showing an embodiment of the present invention.
Fig. 3 is a flow chart of the operation of an education training management system showing an embodiment of the present invention.
Fig. 4 is a flow chart of the operation performed when a lecture for one chapter is taken by a trainee in an embodiment of the present invention.
Fig. 5 is a view of a main menu screen in an embodiment of the present invention.
Fig. 6 is an example view of a chapter menu screen in an embodiment of the present invention.
Fig. 7 is an example view of a section screen in an embodiment of the present invention.
Fig. 8 is a flow chart of the operation performed when a superior of a trainee performs a change of the lecture contents or reads the lecture information of the trainee under management of the superior.
Fig. 9 is a flow chart of the operation performed when the contents of an education training course are changed due to an upgrade or the like in an embodiment of the present invention.
Fig. 10 is a flow chart of operation when a post or job contents of a trainee is changed in an embodiment of the present invention.

### PREFERRED EMBODIMENTS

Preferred embodiments will be described with reference to Fig. 1 to Fig. 10 as follows.

In these drawings, reference numeral 1 denotes a terminal for a trainee; 2, a terminal for a superior; 3, a management system server; and 4, a terminal for an education manager.

The education training management system and the method of education management training of the present invention aim at helping trainees such as service engineers master techniques and skills for maintenance and inspection of an aligner used for manufacturing of semiconductor devices and the like.

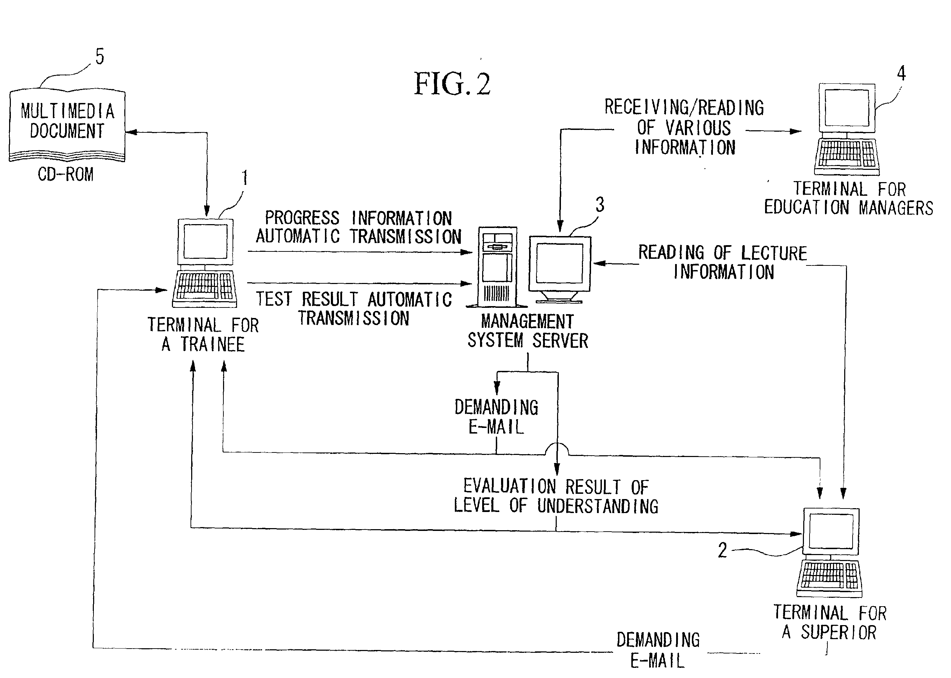

The education training management system, as shown in Fig. 1 and Fig. 2, comprises the terminal 1 for a trainee such as a notebook type personal computer that can provide an education training course taken by the trainees, the terminal 2 for a superior (the terminal for a manager) such as a personal computer used by the superior (the manager) of the trainee, and the management system server 3 (the computer for use in training management) as a Web server that is connected to the terminal 1 for a trainee and the terminal 2 for a superior via the Internet or an intranet (a communication line) and manages lecture information of the trainees. Moreover, the terminal 4 for an education manager such as a personal computer used by an education training manager (for example, a manager of a training center) of the education training course is connected the management system server 3.

The terminal 1 for a trainee reads out software from a CD-ROM 5 in which the software for executing the education training course is written, or reads out the software transmitted from the management system server 3 via the Internet, and runs the software. The terminal 1 for a trainee comprises an information transmission/receiving section (information communication means, function information communication means) 6 that receives the software transmitted from the management system server 3 via the Internet and automatically transmits the lecture information of the trainees to the management system server 3 via the Internet in an e-mail form, and an e-mail transmission/receiving section of a trainee (function information communication means) 7 that transmits and receives regular e-mail.

Note that the terminal 1 for trainees may receive and execute the software transmitted from the management system server 3 via the Internet.

The education training course is provided in order for trainees to master techniques and skills for maintenance and inspection of an aligner, and is constituted of a course consisting of a plurality of chapters that is made of one or a plurality of sections by means of a multimedia document using sentences, pictures, images, animations and voice, a plurality of gateway tests (examinations) for measuring the level of understanding at every chapter, and a final test provided at the end of the course.

For example, the education training course provides trainees, in one chapter, with a procedure for disassembling and assembling an apparatus in a multimedia document of a simulation style by sentences, actual pictures, images, CG (computer graphics) and the like. Questions as a gateway test are provided at the end of the chapter such as the one for putting a randomly displayed disassembling/assembling procedure in the right order, one for filling in keywords or numbers in blanks, and one for selecting a correct answer from a plurality of choices.

The software for executing the education training course comprises a display function of a table of contents for each chapter, a keyword searching function and an index display function, and these functions are set so as to jump to a desired chapter and section (except chapters and sections that the taking of lectures are restricted).

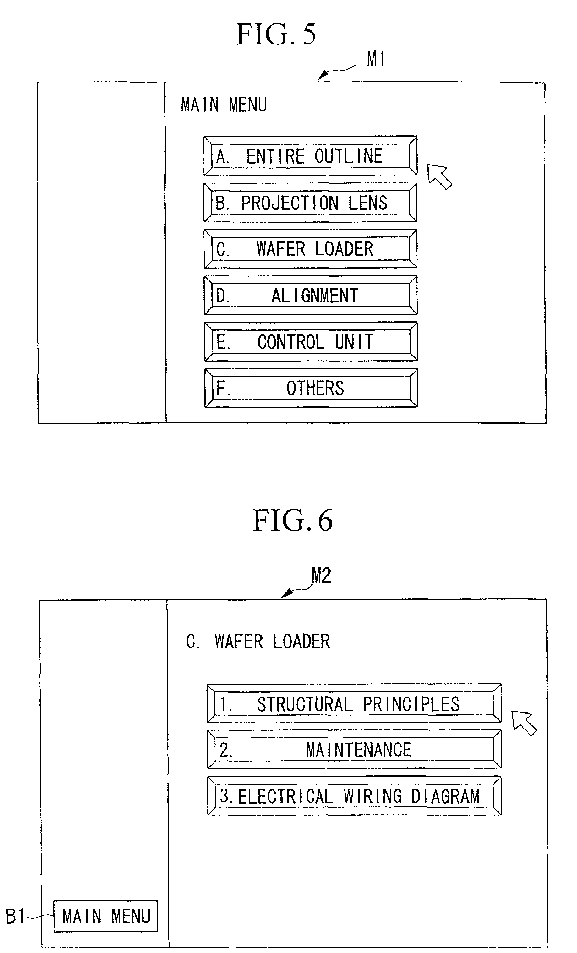

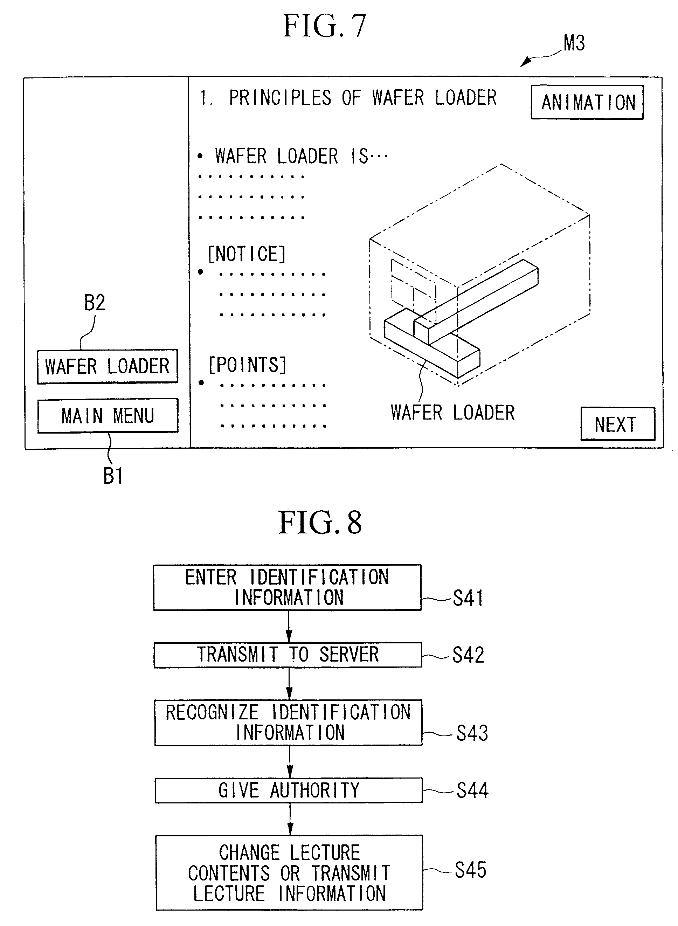

For example, in this software, a main menu screen M1 that displays a table of contents for each chapter is displayed on the terminal 1 for a trainee, as shown in Fig. 5. The trainee can jump to a menu screen M2 for each chapter according to his or her instructions by clicking on the display portion for each chapter with a pointing device such as a mouse as shown in Fig. 6. Note that the table of contents for each section is displayed on a menu screen M2 for each chapter similarly. The trainee can jump to a screen M3 of a corresponding section according to his or her instructions by clicking on the display portion of each section as shown in Fig. 7.

In addition, in this software, the screen M3 for each section displays operation buttons B1 and B2 for returning to the main menu screen M1 or the menu screen M2 for a chapter. By instructing by clicking the operation buttons B1 and B2 by a mouse or the like, the trainees can jump to the main menu screen M1 or the menu screen M2 for a chapter.

The lecture information includes progress information and results of gateway tests and a final test for trainees, and the progress information includes time and the number of days spent on each chapter.

The terminal 1 for a trainee is set, according to a program of the education training course read out from the CD-ROM 5, such that it refuses to provide the next chapter to a trainee if the result of the gateway test does not reach the passing mark, and provides the trainee with the same chapter again in which the trainee has not reached a passing mark. Specifically, if trainees cannot achieve a passing mark in a gateway test, they are regarded to have not fully understood the chapter, thus the trainees are supposed to take the same chapter until they obtain a level of understanding that exceeds a certain mark.

The management system server 3 comprises an aggregate storing section 10 (aggregate storing means) that consists of an aggregate operation means 8 for aggregating received lecture information and aggregate data base 9 for storing aggregate results. The aggregate storing section 10 performs management by classifying the lecture information according to every education training course, trainee, chapter and section.

Moreover, the aggregate operation section 8 is set so as to form a table and a graph indicating progress information and a table and a graph of the result of gateway tests, and store them in the aggregate data base 9 as a part of the aggregate result.

The management system server 3 comprises an e-mail of a delay transmission section 11 (e-mail of a delay transmission means) for transmitting a delay e-mail as notification of delay to each e-mail address of the trainee and his/her superior via the Internet if the time for taking a lecture included in the progress information of the trainee exceeds a previously set standard time for taking a lecture, and a demanding e-mail transmission section 12 (demanding e-mail transmission means) for transmitting a demanding e-mail to each e-mail address of the trainee and his/her superior via the Internet if the number of lecture days included in the progress information exceeds the previously set number of days.

Further, the management system server 3 comprises an appropriateness analysis section 13 (appropriateness analysis means) that analyze the appropriateness of the lecture information, specifically whether the education training course is easy to understand and appropriate for the trainees, and a level of understanding analysis section 14 (level of understanding analysis means) for performing analysis of the level of understanding for the education training course according to the lecture information.

The appropriateness analysis section 13 is set so as to gather the time for taking a lecture needed for each chapter, test results (test scores) and the number of lectures taken and the like included in the lecture information of a plurality of trainees, compute a mean value and standard deviation, and form an analysis sheet and an analysis graph, and then they are stored in the aggregate data base 9 as a part of the aggregate result. Moreover, the appropriateness analysis section 13 is designed to provide the analysis results of the obtained appropriateness to the education training manager, the superior of the trainees, the document producer and the planner of the education training management course via the Internet.

For example, if for a chapter of the education training course there is a tendency for a large number of trainees to spend long time taking a lecture, to have low scores for gateway tests, to repeat taking the same lecture and the like, the evaluation of the quality of teaching materials can be performed because the material is hard to understand and is not suitable. Accordingly, the contents of the multimedia document for each chapter is improved based on the analysis result, and feedback of the analysis result is performed in order to make it more efficient and easier to understand.

The level of understanding analysis section 14 automatically forms a table and a graph indicating the level of understanding based on the result of tests, a table and a graph indicating the number of lectures taken repeatedly, a table for time spent to complete a course indicating the time for taking a lecture, and calculates the level of difficulty by aggregating the number of lectures taken and the level of difficulty based on an average of each chapter of all trainees, thus analyzing the area side of a trainee.

For example, ten questions are set for each chapter as a gateway test, and the rate of correct answers for each chapter is calculated, then the level of difficulty and the level of understanding described above are calculated.

The section 14 is set to form a weak area analysis result that indicates a chapter and a section of low level of understanding as the weak area.

Moreover, the level of understanding analysis section 14 is set so as to transmit the above-described analysis result to the terminal 1 for a trainee of the trainee and the terminal 2 for a superior of the superior of the trainees by e-mail via the Internet, and send feedback of the weak area analysis result to the trainee and the superior. Specifically, it is set to instruct the trainee by e-mail to take the lecture again for a chapter that was indicated by the weak area analysis as a low level of understanding.

Furthermore, the level of understanding analysis section 14 is set so as to record and update the analysis result on a management sheet for each trainee and a management sheet for each course one by one, and record data of the management sheet for each trainee and a management sheet for each course in the aggregate data base 9 as a part of the aggregate result.

The terminal 2 for a superior comprises a reading communication section 15 (reading means) that can read the aggregate result in the aggregate data base 9 by accessing the management system server 3 via the Internet, and an e-mail transmission/receiving section of superiors that transmits/receives an e-mail via the Internet.

The terminal 4 for an education manager comprises a data communication section 17 that can read and receive the aggregate result in the aggregate data base 9 by accessing the management system server 3 via the Internet.

The superior of the trainees is given ID information and a password (identification information) and the identification information is registered in the management system server 2. Accordingly, the management system server 3 comprises an authority recognition section 20 (recognition means) for identifying the superior for the trainees, on receiving the identification information from the superior of the trainees, and for giving the superior of trainees authority to change the lecture contents (such as a change of a chapter to be taken by trainees) and to read the lecture information (such as data of progress status and test results).

In other words, the management system server 3 is designed to give the superior of the trainees authority, by entering the ID information and the password, to perform at least either a change of the lecture contents of the trainees or reading of the lecture information via the authority recognition section 20, change the lecture contents according to the instructions of the superior with authority, or provide the terminal 2 for superiors with the lecture information via the Internet.

The terminal 2 for a superior is designed to be given authority to change the lecture contents of the trainees and read lecture information for data stored in the management system server 3 by transmitting the identification information of the superior of the trainees to the management system server 3 via the Internet.

Moreover, in the terminal 1 for a trainee, the lecture contents of the education training course provided by the management system server 3 can be changed by the superior of the trainees, and the lecture information transmitted to the management system server 3 can be read by the superior of the trainees.

When a change is made to the contents of the education training course, for example, when the education training course is revised in the case where an aligner, which is an object to be mastered, is improved or replaced with a new type, the changed contents have to be sent to the trainees and the superiors of the trainees.

Accordingly, when the change is made for the contents of the education training course, the management system server 3 of the present invention is designed to provide notification of the change or information about the changed contents to the terminal 1 for a trainee of a trainee who needs to take the lecture according to the change and to the terminal 2 for a superior of a superior who manages the trainee. In other words, the terminal 1 for a trainee and the terminal 2 for a superior are designed to automatically receive the above-described notification of the change or the information about the changed contents from the management system server 3 via the Internet, when the change is made for the contents of the education training course.

In addition, when a post of the trainee is changed due to a transfer or the job content is changed according to the change of an apparatus or of the duties of the trainee, the contents to be taken by the trainee have to be changed appropriately.

Therefore, in the management system server 3, when information concerning the change in the post or job contents of the trainee is provided, the stored data corresponding to the trainee is changed according to the change, and the information about the contents of the lecture to be taken by the trainee is also changed, and then the changed information is provided to the terminal 1 for a trainee of the trainee via the Internet.

That is, when contents of the education training course that has to be taken by the trainee, the terminal 1 for a trainee is set so as to receive the notification of the change or the information of the changed contents from the management system server 3 via the Internet.

The terminal 1 for a trainee is designed so as to provide the change information about the post or the job content of the trainee to the management system server 3 via the Internet, and change the data stored in the management system server 3 corresponding to the trainee as well as information about the contents to be taken by the trainee according to the change.

The terminal 2 for superiors is designed so as to provide the change information of the post or the job contents of the trainee under management of the superior to the management system server 3 via the Internet, and change the data stored in the management system server 3 corresponding to the trainee as well as information about the contents to be taken by the trainee according to the change.

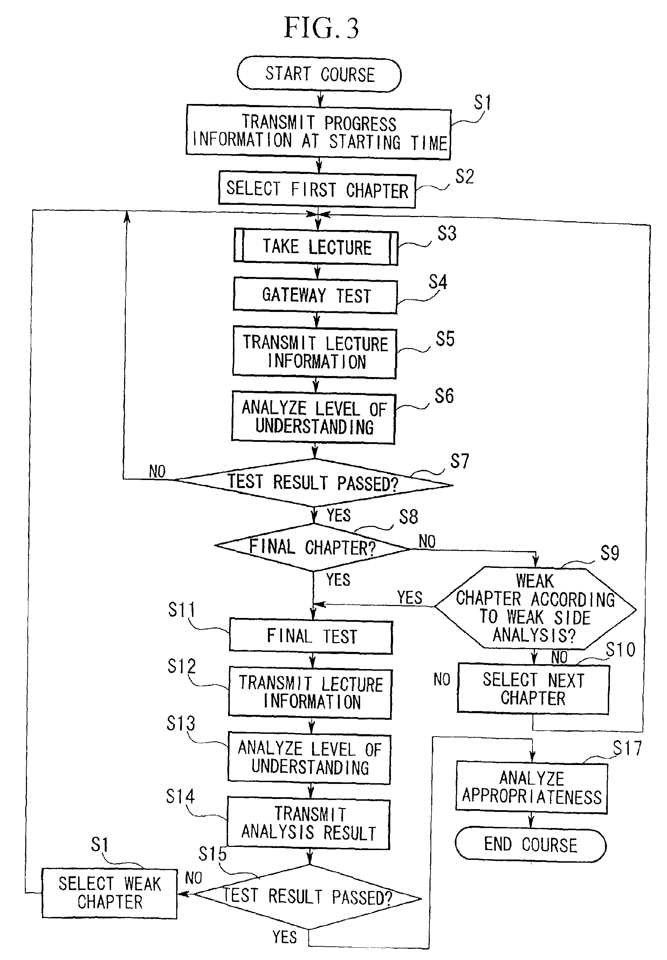

Next, the operation of the education training management system of the present invention will be described with reference to the flowcharts shown in Fig. 3 to Fig. 10.

First, the superior of trainees selects in advance an appropriate education training course based on such factors as the capability of each trainee, and an application of the training course toward the education training manager is performed by informing him or her of the name of the education training course to be performed and the name of the trainee. The education training course manager who received the registration sets the registered education training course and the trainee for the management system server 3, and sends the CD-ROM 5 to the trainee, which executes the registered education training course. The trainee executes the software in the CD-ROM 5 by the terminal 1 for a trainee to execute the education training course, and selects the registered education training course to start taking the course.

When the course starts, the terminal 1 for trainees automatically transmits the starting date (step S1) with the information transmission/receiving section 6 along with the trainee ID as the progress information (lecture information) of the trainee to the management system server 3 by e-mail via the Internet as shown in Fig. 3.

The terminal 1 for a trainee selects chapter 1 (step S2) according to the education training course, and provides the trainee with the contents of chapter 1 to be mastered by the multimedia document (step S3) in order of the sections of the chapter.

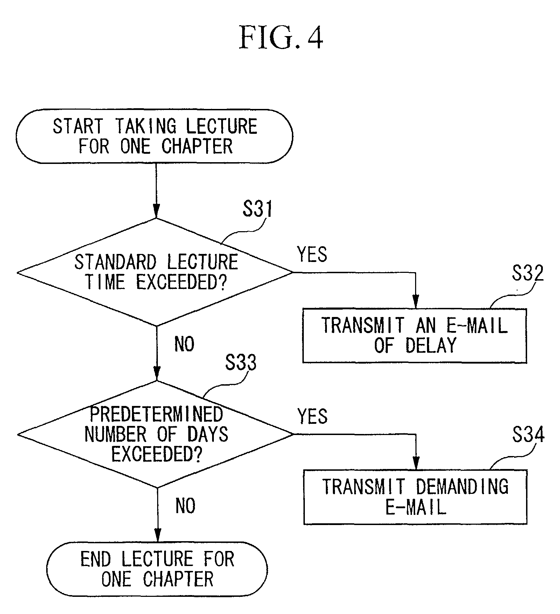

After the course has started, as shown in Fig. 4, if the time for taking a lecture (step S31) from the starting date of the lecture exceeds the standard time for taking a lecture, an e-mail message from delay transmission section 11 of the management system server 3 transmits (step S32) a delay e-mail to the trainee and the superior of trainees by e-mail.

In addition, if the number of days for the lecture from the starting date exceeds (step S33) a predetermined number of days, the demanding e-mail transmission section 12 of the management system server 3 transmits (step S34) a demanding e-mail to the trainee and the superior of trainees indicating a significant delay in progress.

Therefore, the terminal 1 for a trainee receives the e-mail concerning the delay and the demanding e-mail by the e-mail transmission/receiving section 7 of trainees, thus encouraging the trainee to take the lecture to prevent a delay in education or training. At the same time, the terminal 2 for superiors receives the e-mail concerning the delay and the demanding e-mail by the e-mail transmission/receiving section 16 of superiors, and the superior of the trainee is notified of the delay and the demand, so as to grasp the lecture status of the trainee.

When the lecture of chapter 1 is finished, the terminal 1 of a trainee performs the gateway test of chapter 1 for the trainee (step S4).

When the gateway test is finished, the test result (test score), the trainee ID and the progress information such as the time for taking the lecture are automatically transmitted (step S5) to the management system server 3 as the lecture information. Then the management system server 3 analyzes (step S6) the level of understanding of the trainee by the level of understanding analysis section 14 for the chapter and each section based on the received lecture information (step S4).

Next, the terminal 1 for trainees judges (step S7) passing of the gateway test based on the result of the gateway test. In other words, if the result of the gateway test does not reach the passing standard, the terminal 1 prohibits the trainee from proceeding to the next step and makes the trainee take the lecture of chapter 1 again. When the result of the gateway test reaches the passing standard, the terminal 1 permits the trainee to proceed to the next step, and judges (step S8) whether the chapter that was taken is the final chapter or not. Thus, the trainee is prevented from proceeding to the next step without having enough understanding.

When the chapter that was taken is not the final chapter, it is judged whether it is a weak chapter according to a weak area analysis (to be described later) (step S9). When it is not a weak chapter, the next chapter is selected for the trainee (step S10) to take the next chapter (step S3). Then, similar to chapter 1, the gateway test (step S4), transmission of the lecture information (step S5), the level of understanding analysis (step S6) and the judgment of test result (step S8) are sequentially performed. In addition, when the chapter taken is not the final chapter, the above-described steps are repeated until the final chapter.

When the chapter taken is the final chapter, the final test is executed for the trainee (step S11).

When the final test is finished, the test result (test score), the trainee ID and so on are automatically transmitted (step S12) to the management system server 3.

Consequently, the management system server 3 analyzes the level of understanding of the trainee by the level of understanding analysis section 14 for the entire course based on the received lecture information (step S13). At this time, the level of understanding analysis section 14 performs analysis of the weak area by measuring the level of understanding for each chapter according to the test result. Further, the analysis result is transmitted to the terminal 1 for trainees of the trainee and the terminal 2 for superiors of the superior of the trainee by e-mail (step S14).

Then, passing judgment is performed for the final test (step S15). Specifically, if the result of the final test does not reach the passing standard, the terminal 1 for a trainee selects the weak chapter that is indicated by the transmitted analysis result (step S16), and makes the trainee take the weak chapter again (step S3).

The steps from the gateway test for the weak chapter (step S4) to the judgment of whether the chapter is final are sequentially performed (step S9) and if the weak chapter is the final chapter, the final test is executed again. The judgment (step S9) on whether it is the chapter is weak according to the weak area analysis even if it is not the final chapter, and the final test are executed similarly (step S11).

Then, the transmission of the lecture information (step S12), the analysis of the weak area (step S13) and the passing judgment for the test result (step S15) are performed again, and weak chapters that are newly analyzed are selected until the score reaches the passing standard (step S16) similarly to the above-described procedure. Thus, the trainee can obtain understanding about a certain level for the entire course.

Finally, when the score reaches the passing standard by the passing judgment for the final test result (step S15), appropriateness of the education training course is analyzed by the appropriateness analysis section of the management system server 3 based on the lecture information of a plurality of trainees, which has been aggregated so far (step S17) thus finishing the education training course. Accordingly, improvement of the education training course is performed based on the obtained appropriateness, which is intended to upgrade effect of the education training.

Note that, after the course is completed, each gateway is removed so that the trainee can use any chapter and section in order to search necessary information throughout all chapters. Therefore, the course is available at any time for the actual duties of field service after the course is completed.

The trainee, while taking the education training course, can discontinue taking the lecture by the terminal 1 for a trainee according to his or her weak situation, and can restart the lecture from the point at which it was discontinued.

The education manager reads the lecture information and the aggregate results that are stored in the aggregate database 9 of the management system server 3, if necessary, by the data communication section 17 of the terminal 4 for an education manager via the Internet.

Moreover, the superior of the trainees can read the lecture information and the aggregate results of the trainees that are stored in the aggregate database 9 of the management system server 3 by the reading communication section 15 of the terminal 2 for superiors any time until the course is completed.

Accordingly, in the education training management system of the present invention, the superior of the trainees can accurately grasp the present condition of the trainees based on the level of understanding and the progress status of the trainees and the transmitted e-mail concerning delays and demanding e-mail, thus coping with the trainees by appropriate instruction and advice.

The case is now described, with reference to the flow chart of Fig. 8, in which the superior of the trainee performs a change of the lecture contents or reading of the lecture information of the trainees under management of the superior. First, the superior of trainees enters his/her own identification information (ID information and password) on the terminal 2 for a superior (step S41). At this time, the terminal 2 for a superior transmits the identification information to the management system server 3 via the Internet (step S42).

The management system server 3, based on the received identification information, judges by the authority recognition section 20 whether it is a superior of the trainees with authority to perform change of the lecture contents or reading of the lecture information (step S43). On recognizing the superior of the trainees with this authority, the management system server 3 changes the lecture information that is managed by the management system server 3 according to the instructions of the superior of the trainee, or provides the lecture information to the terminal 2 for a superior of the superior of the trainees from the management system server 3 (step S45). The superior of the trainees, for example, can send instructions such as "You do not need to take the test for this chapter" or "You do not need to take the lecture for this chapter at all" to any trainee under his/her management as a change of the lecture contents.

As described above, the management system server 3, according to the instructions of the manager to whom such authority is given, can change the lecture contents or provide lecture information to the terminal 2 for a superior of the manager from the management system server 3 via the Internet. Therefore, only the manager with authority can change the lecture contents and instruct the trainees under his or her management with a suitable lecture, and can accurately grasp the status of the trainees because the lecture information can be read at any time.

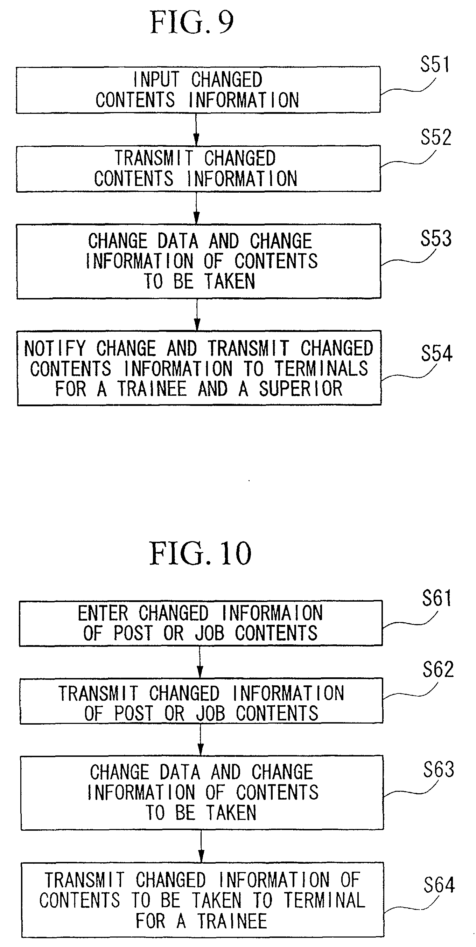

The case is now described, with reference to the flow chart of Fig. 9, in which the contents of the education training course is changed due to upgrading and the like. First, the education manager enters information about the changed contents for the education training course on the terminal 4 for an education training manager (step S51). At this time, the terminal 4 for an education training manager transmits the information of the changed contents to the management system server 3 via the Internet (step S52).

Second, the management system server 3, on receiving the changed information, changes the stored data corresponding to the trainee, and changes the information of the lecture contents to be taken by the trainee according to the change, judging by the lecture contents (lecture history) taken by the trainee and information regarding his or her post and duties (step S53). For example, the management system server 3 scans a data table recording the progress status of the trainee, and picks up a chapter or a section that the trainee has not taken yet of the upgraded education training courses to make it required material.

The management system server 3 transmits (step S54) notification of the change and information of the changed contents to the terminal 1 for a trainee of the trainee who needs to take a lecture according to the change and the terminal 2 for a superior used by the superior of the trainee via the Internet.

Note that the information of the changed contents to be transmitted to the terminal 1 for a trainee includes information of the lecture contents that the trainee needs to take according to the change. Also, the terminal 1 for a trainee or the terminal 2 for a superior can access the management system server 3 via the Internet in order to receive notification of the change and information about the changed contents.

As described above, since a notification of the change or information about the changed contents is provided at least to either the terminal 1 for a trainee of the trainee who needs to take a lecture according to the change or to the terminal 2 for a superior of the superior of the trainee, the trainee and the superior of the trainee can know the change of contents for the education training course, thus the trainee can take a lecture with appropriate contents according to the change.

The case is new described, with reference to the flow chart of Fig. 10, in which the post or the job content of the trainee is changed. First, the trainee, with the terminal 1 for a trainee, and the superior of the trainee, with the terminal 2 for a superior, enter information about the change of post or the change of job content of the trainee (step' S61). The education manager may enter the information with the terminal 4 for an education manager into the management system server 3 via the Internet.

When the above-described information is entered, the terminal 1 for a trainee or the terminal 2 for a superior transmits (step S62) the information to the management system server 3 via the Internet.

Second, the management system server 3 that received the information changes the stored data corresponding to the trainee, and the information about the lecture contents to be taken by the trainee according to the change as well. In addition, the management system server 3 transmits the changed information to the terminal 1 for a trainee via the Internet (step S64).

Therefore, when information of the change of post or the job content of the trainee is provided to the management system server 3, data stored in the management system server 3 corresponding to the trainee is changed, and information of the lecture contents to be taken by the trainee according to the change is also automatically changed, and then the changed information is provided to the terminal 1 for a trainee from the management system server 3 via the Internet. Thus, all the changed information can be provided to each trainee at any time.

Note that the technology range of the present invention is not limited to the above-described embodiments, and various changes can be made without departing from scope of the present invention.

For example, the embodiment describes the case that the software to execute the education training course permits the trainee to take the next chapter only when the gateway test result for each chapter reaches the passing standard. But the software setting can be changed so as to permit the trainee to take an optional chapter even if the gateway test result does not reach the passing standard. Note that, even in such a case, the software is set so that the final test result must fulfill the passing standard, and may be set so that the demanding e-mail is transmitted to the trainee from the management system server 3 when the time spent by the trainee exceeds or is likely to exceed a set time for taking a lecture limit (for example one month) for the entire course.

In the embodiments, the present invention was applied to a system that gives trainees who are service engineers education/training regarding maintenance and inspection of an aligner as an education training management system, but the invention may be adopted as an apparatus other than an aligner or a system that gives education/training.

For example, the invention may be adopted as an education training system for any job, to use it as in-house education means for all employees, and not limited only to service engineers.

Alternatively, the invention may be applied to a communication education system performed for trainees who are elementary school or junior high school students via the Internet, and the system allows their parents as managers of the trainees to check the progress status and the level of understanding of the children on occasion.

The above-described embodiments run the software for executing the education training course by providing trainees with the CD-ROM 5 as a storing medium and reading it with the terminal 1 for a trainee. But, the software for the education training course may be provided on other storage media such as FD's, HDD's and DVD's. Otherwise, the software may be provided to the terminal 1 for a trainee by the management system server 3 via a communication line such as the Internet, without using such portable storing media.

Note that the system may be set so that only gateway tests and final tests are transmitted form the management system server 3 to the terminal 1 for a trainee via the Internet, or a keyword for selecting the next chapter is transmitted from the management system server 3 to the terminal 1 for a trainee only when the test result reaches the passing standard.

The embodiments transmit each lecture information and e-mails via the Internet of a public a communication line, but they may be transmitted via a dedicated communication line such as a LAN.

Gateway tests are set at every chapter, but they may be set at every section.

Moreover, the trainee may read only his or her own lecture information by accessing the management system server 3 via the Internet with the terminal 1 for a trainee.

As has been described, the following effects can be obtained according to the education training management system and the education training management method of the present invention.

According to the education training management system and the education training management method of the present invention, a computer for use in training management aggregates received lecture information and stores the aggregate result, and the terminal for a manager accesses the computer for use in training management so as to read the aggregate result. Therefore, each trainee can individually take a lecture at his or her convenience, and efficient education training can be performed by intensively managing the lecture information.

The knowledge level of all trainees can set in advance above a certain level before giving a skill lecture, thus such lectures can effectively be given. In addition, the manager can easily learn the lecture information (the level of understanding and the progress status) of the trainee from a remote location, and appropriate instruction and management can be performed for the trainee according to the obtained lecture information.

Further, according to the education training management system and the education training management method of the present invention, the manager can easily grasp the lecture progress and accurately grasp the level of understanding of the trainee based on the test results by accessing the lecture information which includes the progress information of the trainee and the test results for checking the trainee's level of understanding.

Even further, according to the education training management system and the education training management method of the present invention, feedback for improving the education training course can be easily carried out by analyzing appropriateness, which improves the quality of each course and to improve the effects of the education training.

Still further, according to the education training management system and the education training management method of the present invention, by performing analysis regarding the level of understanding for the education training course based on the lecture information, analysis of the level of understanding makes it easy to grasp the weak areas in a course. Therefore, appropriate instruction can be given to the trainee according to the level of understanding.

Still further, according to the education training management system and the education training management method of the present invention, by again providing the trainee with a section where his or her level of understanding did not reach a predetermined standard, as judged by the analysis result of the education training course, the trainee is made to study his or her weak area intensively. Therefore, the trainee can obtain sufficient understanding, thus the knowledge level of all the trainees can be increased above a certain level.

Still further, according to the education training management system and the education training management method of the present invention, the computer for use in training management transmits an e-mail of delay notification to the e-mail addresses of the trainee and the manager based on the progress information when the time for taking a lecture exceeds a previously set time. The delay notification e-mail can make the trainee increase his or her progress in the lectures, and the manager can grasp the progress status.

Still further, according to the education training management system and the education training management method of the present invention, the computer for use in training management, by transmitting a demanding e-mail to the e-mail addresses of the trainee and the manager based on the progress information when the number of days spent for the lecture exceeds a preset number of days, and notifies the trainee by the demanding e-mail. Therefore, the training management can make the trainee restart the lecture or quicken his or her progress, and also make the manager recognize that the lecture is likely to have been discontinued for the long time.

Still further, according to the education training management system and the education training management method of the present invention, the computer for use in training management, by managing the lecture information of every chapter and section for each education training course, can easily perform aggregation and analysis of lecture information for every chapter and section for each course, and only the necessary lecture information can be easily read.

Still further, according to the education training management system and the education training management method of the present invention, the terminal for a trainee provides the trainee with a test for at least either every chapter or every section. When the test result does not reach a passing standard, the terminal for a trainee refuses to provide the trainee with the next chapter or section, but it again provides the trainee with the chapter or the section again for which his or her test result did not reach a passing standard, thus the trainee is prevented from proceeding to the next chapter or section without obtaining sufficient understanding of the current chapter or section.

Still further, according to the education training management system and the education training management method of the present invention, the public communication line is the Internet, and the computer for use in training management, as a Web server, communicates with the terminal for the trainee and the terminal for the manager. Thus, there is no need for providing with dedicated line, and a lecture can be taken regardless of the place and time.

Still further, according to the education training management system and the education training management method of the present invention, the terminal for a trainee provides an education training course that is created with a multimedia document. Thus, education materials of high quality and which are easy to understand can be provided in various forms of presentation, such as writing, pictures, images, animations and voice.

Still further, according to the education training management system and the education training management method of the present invention, by making an education training course that gives trainees education and training of techniques and skills regarding maintenance and inspection of an apparatus, trainees who are service engineers and the like can quickly and accurately master techniques for accurately and quickly performing maintenance and inspection of an apparatus.

Still further, according to the education training management system and the education training management method of the present invention, by making an education training course that gives trainees education and training of techniques and skills regarding maintenance and inspection of a processing apparatus used for semiconductor manufacturing, trainees can quickly and accurately master techniques and skills for a complicated apparatus like an aligner, which used to require a great amount of time for mastering.

According to the education training management system, the computer for use in training management and the education training management method of the present invention, authority is given to managers that enables them to perform at least either a change of lecture contents or a reference to lecture information, and, according to the instructions of managers, the lecture contents are changed or the lecture information is provided to the terminal for a manager via a communication line. Also according to the terminal for a trainee and the education training method of the present invention, the lecture contents of the education training course provided by the computer for use in training management can be changed by the manager of the trainee or the lecture information to be transmitted to the computer for use in training management can be read by the manager. Further, according to the terminal for a manager and the education training method of the present invention, authority is given to the terminal for a manager that enables it to, based on identification information, at least either change of the lecture contents of the trainee or read the lecture information of the trainee for data stored in the computer for use in training management via a communication line. Therefore, only a manager with authority can change the lecture contents to give appropriate instructions to the trainee under his or her management, and can read the lecture information at any time so as to grasp the status of the trainee accurately.

Therefore, individual information of the trainees, who are service engineers and the like, such as their level of understanding or progress status can be properly managed, and third parties other than specified people such as their superior are prohibited from accessing such information.

Further, according to the computer for use in training management and the education training management of the present invention, by judging whether or not a manager has authority based on the identification information of the manager that is provided via a communication line, authority can be determined with accuracy, and management of the authority of managers can be easily carried out.

According to the education training management system, the computer for use in training management and the education training management method, notification of change or information about the changed contents is provided via a communication line to at least either the terminal for a trainee of the trainee who needs to take a lecture according to the changed contents of the education training course or the terminal for a manager used by the manager of the trainee. Also according to the terminal for a trainee and education training method of the present invention, when a change is made to the contents of the education training course, the terminal for a trainee receives a notification of the change or information about the changed contents from the computer for use in training management that manages lecture information of the trainee. Further, according to the terminal for a manager and the education training management method of the present invention, when a change is made to the contents of the education training course, the terminal for a manager used by the manager of the trainee receives a notification of the change or information about the changed contents from the computer for the training management via a communication line. Therefore, the trainee or the manager can receive information about the changed contents at any time, thus the trainee can take a lecture with appropriate contents based on the change and the manager can easily grasp the status of the trainee.

Consequently, every trainee such as service engineers can receive the changed contents due to improvements or the like at any time, and load for the confirmation of the changed contents can be reduced, and then the trainee can efficiently master the techniques and the skills in consideration of the mastered contents.

According to the computer for use in training management and the education training management method of the present invention, when changed information of the post or job contents is provided to the computer for use in training management, data stored in the computer for use in training management corresponding to the trainee is changed. And information of lecture contents that the trainee needs to take according to the change is also changed, then the changed information is provided by the computer for use in training management to the terminal for a trainee via a communication line. Thus, each change of information can be provided to the trainee at any time.

Moreover, according to the terminal for a trainee, the terminal for a manager, the education training management method and the education training management method of the present invention, changed information of the post or job content of the trainee is provided by either the terminal for a trainee or the terminal for a manager to the computer for use in training management via a communication line. And data stored in the computer for use in training management corresponding to the trainee is changed, and information of lecture contents that the trainee needs to take according to the change is also changed, then the trainee or the manager changes the information of the lecture contents that the trainee needs to take properly and automatically.

As a result, even in the case of a change of post and the like, trainees who are service engineers and the like can automatically obtain a new course to be mastered in consideration of what the trainees have already mastered, thus, load for self confirmation of the course can be reduced.

## Claims

1. An education training management system comprising:
a terminal for a trainee that can provide an education training course taken by a trainee;
a terminal for a manager used by a manager of the trainee; and
a computer for use in training management, the computer being connected to both the terminal for a trainee and the terminal for a manager via a communication line, and which manages lecture information of the trainee,
wherein the terminal for a trainee includes information communication means that automatically transmits lecture information of the trainee to the computer for use in training management,
the computer for use in training management includes aggregate storing means that aggregates the received lecture information and stores the aggregate result, and
the terminal for a manager includes reading means that can read the aggregate result by accessing the computer for a manager via the communication line.

2. The education training management system according to claim 1,
wherein a test is set in the education training course for the purpose of checking the level of understanding of the trainee, and
the lecture information includes progress information of the trainee and a result of the test.

3. The education training management system according to claim 2,
wherein, based on the lecture information, the computer for use in training management comprises means for appropriateness analysis that analyzes the appropriateness of the education training course.

4. The education training management system according to any one of claims 2 or 3,
wherein, based on the lecture information, the computer for use in training management comprises means for analyzing the level of understanding that performs analysis of the level of understanding with regard to the education training course.

5. The education training management system according to claim 4,
wherein the means for analyzing the level of understanding transmits analysis results of the level of understanding to the terminal for a trainee, and
the terminal for a trainee again provides the trainee with a portion for which his or her level of understanding did not reach a predetermined standard.

6. The education training management system according to any one of claims 1 to 5,
wherein the lecture information includes progress information of the trainee, and
the computer for use in training management comprises,
an e-mail delay transmission means that transmits an e-mail of delay notification to e-mail addresses of the trainee and the manager based on the progress information if the time spent on the lecture exceeds a previously set time.

7. The education training management system according to any one of claims 1 to 6,
wherein the lecture information includes progress information of the trainee, and
the computer for use in training management comprises,
a demanding e-mail transmission means that transmits an e-mail demanding notification to e-mail addresses of the trainee and the manager based on the progress information in the case where the number of days spent on the lecture exceeds a previously set number of days.

8. The education training management system according to any one of claims 1 to 7,
wherein one or a plurality of the education training courses is provided,
each education training course is constituted of a plurality of chapters, each chapter being constituted of one or a plurality of sections, and
the computer for use in training management manages the lecture information of every chapter and every section in every education training course.

9. The education training management system according to claim 8,
wherein the terminal for a trainee provides the trainee with a test at least at every chapter or every section, refuses to provide the trainee with the next chapter or section when the test result does not reach a passing standard, and again provides the trainee with a chapter or the section for which the test result did not reach a passing standard.

10. The education training management system according to any one of claims 1 to 9,
wherein the communication line is the Internet, and
the computer for use in training management communicates, as a Web server, with the terminal for a trainee and the terminal for a manager.

11. The education training management system according to any one of claims 1 to 10,
wherein the terminal for a trainee provides the education training course created by a multimedia document.

12. The education training management system according to any one of claims 1 to 11,
wherein the computer for use in training management transmits the education training course created by a multimedia document to the terminal for a trainee.

13. The education training management system according to any one of claims 1 to 12,
wherein the education training course provides the trainee with education and training for techniques and skills with regard to maintenance and inspection of an apparatus.

14. The education training management system according to claim 13,
wherein the apparatus is a processing apparatus used in semiconductor manufacturing.

15. The education training management system according to any one of claims 1 to 14,
wherein the computer for use in training management gives the manager authority to enable at least either a change of lecture contents of the trainee or to refer to lecture information, change the lecture contents, or provide the terminal for a manager with the lecture information via the a communication line according to the instruction of the manager with authority.

16. The education training management system according to any one of claims 1 to 15,
wherein the computer for use in training management, when the contents of the education training course are changed, provides at least either the terminal for a trainee of the trainee who needs to take a lecture according to the change or the terminal for a manager of the manager who manages the trainee with notification of change or information about the changed contents via the communication line.

17. The education training management system according to any one of claims 1 to 16,
wherein the computer for use in training management, when a post or job content of the trainee is changed, provides the terminal for a trainee with content information of the education training course that the trainee needs to take.

18. A computer for use in training management that manages lecture information of a trainee who takes an education training course,
wherein authority is given to the manager to perform at least either a change of lecture contents of the trainee or reading of lecture information, and
the lecture contents are changed or the lecture information is provided to the terminal for a manager via a communication line according to instructions of the manager with authority.

19. The computer for use in training management according to claim 18, further comprising recognizing means that judges whether a manager is the manager with authority based on identification information of the manager provided via the communication line.

20. A terminal for a trainee that can provide an education training course taken by a trainee, which is connected to a computer for use in training management that manages lecture information of the trainee via a communication line, the terminal for a trainee including function information communication means that receives the education training course from the computer for use in training management and transmits the lecture information to the computer for use in training management, and the lecture contents of the education training course provided by the computer for use in training management can be changed by a manager of the trainee or the lecture information to be transmitted to the computer for use in training management is readable by the manager.

21. A terminal for a manager used by a manager of a trainee who takes an education training course,
wherein authority is given to the manager for performing at least either a change of lecture contents of the trainee or reading of lecture information with regard to data stored in the computer for use in training management by transmitting identification information of the manager to a computer for use in training management that manages the lecture information of the trainee via a communication line.

22. A computer for use in training management that manages lecture information of a trainee who takes an education training course,
wherein, if the contents of the education training course are changed, a notification of the change or information about the changed contents is provided to at least either the terminal for a trainee of a trainee who needs to take a lecture according to the change or the terminal for a manager of a manager who manages the trainee via a communication line.

23. A terminal for a trainee that can provide an education training course taken by a trainee,
wherein, if the contents of the education training course that the trainee have to take is changed, a notification of the change or information about the changed contents is received from a computer for use in training management that manages lecture information of the trainee via a communication line.

24. A terminal for a manager used by the manager of a trainee who takes an education training course,
wherein, if the contents of the education training course that the trainee have to take is changed, a notification of the change or information about the changed contents is received from a computer for use in training management that manages lecture information of the trainee.

25. A computer for use in training management that manages lecture information of a trainee who takes an education training course,
wherein, if information of a change of post or job content of the trainee is provided, stored data corresponding to the trainee is changed, information of lecture contents to be taken by the trainee is also changed according to the change, and the changed information is provided to a terminal for a trainee of the trainee via a communication line.

26. A terminal for a trainee that can provide an education training course to be taken by a trainee,
wherein information of a change of post or job content of the trainee is provided to a computer for use in training management that manages lecture information of the trainee via a communication line, stored data in the computer for use in training management corresponding to the trainee is changed, and information of lecture contents to be taken by the trainee is also changed according to the change.

27. A terminal for a manager used by a manager of a trainee who takes an education training course,
wherein information of a change of post or job content of the trainee who are under management of the manager is provided to a computer for use in training management that manages lecture information of the trainee via a communication line, stored data in the computer for use in training management corresponding to the trainee is changed, and information of lecture contents to be taken by the trainee is also changed according to the change.

28. A method of education training management, comprising the steps of:
providing an education training course for a trainee through a terminal for a trainee;
receiving lecture information of the trainee from the terminal for a trainee via a communication line;
aggregating the lecture information and storing the aggregate results by a computer for use in training management; and
enabling a manager of the trainee to read the aggregate results when the manager accesses the computer for use in training management by a terminal for a manager via a communication line.

29. The method of education training management according to claim 28,
wherein a test for checking the level of understanding of the trainee is set in the education training course, and
the lecture information includes progress information and a result of the test of the trainee.

30. The method of education training management according to claim 29,
wherein the step of storing the aggregate result includes a step of performing analysis regarding appropriateness of the education training course based on the lecture information.

31. The method of education training management according to any one of claims 29 and 30,
wherein the step of storing the aggregate result includes a step of performing analysis regarding the level of understanding for the education training course based on the lecture information.

32. The method of education training management according to claim 31,
wherein the step of performing analysis regarding the level of understanding transmits the analysis result for the level of understanding to the trainee, and
the step of providing the education training course, based on the analysis result, again provides the trainee with a portion, in which his or her level of understanding did not reach a predetermined standard, within the education training course.

33. The method of education training management according to any one of claims 28 to 32,
wherein the lecture information includes progress information of the trainee, and
comprising the step of transmitting an e-mail message of delay notification to e-mail addresses of the trainee and the manager from the computer for use in training management if the time for taking a lecture exceeds a previously set time based on the progress information.

34. The method of education training management according to any one of claims 28 to 33,
wherein the lecture information includes progress information of the trainee, and
comprising the step of transmitting an e-mail message for demanding to e-mail addresses of the trainee and the manager from the computer for use in training management if the number of days spent on a lecture exceeds a previously set number of days based on the progress information.

35. The method of education training management according to any one of claims 28 to 34,
wherein one or a plurality of the education training courses are provided,
each education training course is constituted of a plurality of chapters that are constituted of one or a plurality of sections, and
the step of storing the aggregate result manages the lecture information for every chapter and every section for each education training course.

36. The method of education training management according to claim 35,
wherein the step of providing the education training course provides the trainee with the test at least every chapter or every section,
refuses to provide the next chapter or section to the trainee if the result of the test does not reach a passing standard, and
again provides the trainee with the same chapter or section in which the trainee does not reach a passing mark.

37. The method of education training management according to any one of claims 28 to 36,
wherein the communication line is the Internet, and
the computer for use in training management, as a Web server, communicates with the terminal for a trainee and the terminal for a manager.

38. The method of education training management according to any one of claims 28 to 37,
wherein the step of providing the education training course provides the education training course created by a multimedia document.

39. The method of education training management according to any one of claims 28 to 38,
wherein the education training course provides the trainee with education and training of techniques and skills regarding maintenance and inspection of an apparatus.

40. The method of education training management according to claim 39,
wherein the apparatus is a processing apparatus used for manufacturing semiconductors.

41. A method of education training management, comprising the steps of:
giving a manager authority to perform at least either a change of lecture contents of a trainee or reading of lecture information by a computer for use in training management that manages lecture information of the trainee; and
changing the lecture contents managed by the computer for use in training management or providing the lecture information to the terminal for a manager via a communication line according to instructions of the manager with authority.

42. The method of education training management according to claim 41, further comprising a step of judging whether a manager is a manager with authority based on identification information of the manager provided via the communication line.

43. A method of education training for a trainee who takes education training provided by a terminal for a trainee, comprising the steps of:
receiving an education training course from a computer for use in training management that manages lecture information of the trainee via a communication line; and
transmitting the lecture information to the computer for use in training management,
wherein the lecture contents of the education training course provided by the computer for use in training management can be changed by a manager of the trainee, or the lecture information to be transmitted to the computer for use in training management is readable by the manager.

44. A method of education training management for a trainee who takes an education training course, comprising the steps of:
transmitting identification information of a manager from a terminal for a manager used by the manager of the trainee via a communication line; and
giving authority for performing at least either a change of lecture contents of the trainee or reading of lecture information with regard to data stored in a computer for use in training management according to the identification information by transmitting identification information of the manager to the computer for use in training management that manages lecture information of the trainee via a communication line.

45. A method of education training management for a trainee who takes an education training course provided by a terminal for a trainee,
wherein, if the contents of the education training course is changed, a notification of change or information about the changed contents is provided to at least either a terminal for a trainee of the trainee who needs to take a lecture according to the change or a terminal for a manager of a manager who manages the trainee via a communication line.

46. A method of education training for a trainee who takes an education training course provided by a terminal for a trainee,
wherein, if the contents of the education training course that the trainee are required to take is changed, a notification of the change or information of the changed contents is received by the terminal for a trainee from a computer for use in training management that manages lecture information of the trainee via a communication line.

47. A method of education training management for a trainee who takes an education training course,
wherein, if the contents of the education training course to be managed that the trainee is required to take is changed, a notification of the change or information of the changed contents is received by a terminal for a manager used by the manager of the trainee from a computer for use in training management that manages lecture information of the rainee via a communication line.

48. A method of education training management for a trainee who takes an education training course provided by a terminal for a trainee,
wherein, if the information of a change of post or job content of the trainee is provided to a computer for use in training management that manages the trainee, stored data in the computer for use in training management corresponding to the trainee is changed, information of lecture contents to be taken by the trainee is also changed according to the change, and the changed information is provided by the computer for use in training management to the terminal for a trainee of the trainee via a communication line.

49. A method of education training for a trainee who takes an education training course provided by a terminal for a trainee,
wherein information of a change of post or job content of the trainee is provided by the terminal for a trainee to a computer for use in training management that manages lecture information of the trainee via a communication line, stored data in the computer for use in training management corresponding to the trainee is changed, and information of lecture contents to be taken by the trainee is also changed according to the change.

50. A method of education training for a trainee who takes an education training course,
wherein information of a change of post or job content of the trainee is provided from a terminal for a manager used by a manager of the trainee to a computer for use in training management that manages lecture information of the trainee via a communication line, stored data in the computer for use in training management corresponding to the trainee is changed, and information of lecture contents to be taken by the trainee is also changed according to the change.
